Europäisches Patentamt

European Patent Office

Office européen des brevets

(19)

(11) Publication number: **0 322 332**
**A2**

# EUROPEAN PATENT APPLICATION

(12)

(21) Application number: **88480081.4**

(22) Date of filing: **22.11.88**

(51) Int. Cl.⁴: **G 06 F 3/023**

(30) Priority: **23.12.87 US 137388**

(43) Date of publication of application:
**28.06.89 Bulletin 89/26**

(84) Designated Contracting States: **DE FR GB IT**

(71) Applicant: **International Business Machines Corporation**
**Old Orchard Road**
**Armonk, N.Y. 10504 (US)**

(72) Inventor: **Eisen, Ivan R.**
**6400 Oakview Drive**
**Flower Mound Texas 75028 (US)**

**Peters, Anthony M.**
**3724 Windsong Lane**
**Bedford Texas 76021 (US)**

**Estes, Mark W.**
**7002 Echo Bluff**
**Dallas Texas 75248 (US)**

(74) Representative: **Tubiana, Max**
**Compagnie IBM France Département de Propriété**
**Intellectuelle**
**F-06610 La Gaude (FR)**

(54) **Graphical method of real time operator menu customization.**

(57) A method of graphically customizing menu displays. A
selected menu or pulldown menu display having multiple menu
entries is displayed. An operator then graphically designates a
particular menu entry and thereafter elects a customizing
option. In the depicted embodiment of the present invention the
customizing options are displayed as elements of a customizer
screen and include options such as: copy; cut; paste, restore;
clear; and file. By utilizing this method the operator may move
or delete a menu entry or alter the textual appearance of a menu
entry. In a preferred embodiment of the present invention, the
operator may also elect to identify a particular menu entry with a
single selected keystroke for accelerated selection of that
menu entry during operation.

**Description**

**GRAPHICAL METHOD OF REAL TIME OPERATOR MENU CUSTOMIZATION**

application.

BACKGROUND OF THE INVENTION

1. Technical Field :

This invention relates in general to methods for customizing menu displays and in particular to graphic methods for customizing both page and pulldown menu displays while utilizing simultaneous display of a customizing screen and the menu display.

2. Background Art :

Many current software applications are so complex and possess so many execution options that an operator needs a great deal of assistance to exercise the many capabilities of these programs. A common method of organizing and presenting multiple software options to an operator is a "menu" or display screen listing multiple options. Many word processing and spread sheet applications utilize multiple pages of menu to assist an operator in the execution of these programs; however, highly complex programs often require far more illustration than is possible with single page menus. For such applications it has become known to utilize a more advanced form of menu known as the "pulldown" menu.

The pulldown menu operates in a manner which is equivalent to having many hidden page menus on a single display screen. This is accomplished by utilizing a "menu bar" or horizontal field which is typically disposed near the top of a display and which contains a number of textual entries or menu bar names. When a menu bar name is evoked (by keystroke or by utilization of a mouse button or other graphic indicator) the display will produce a viewport or "window" which includes a pulldown list of additional menu entries. Each menu entry is effective to produce a particular result, such as: the carrying out of a particular command; the election or non election of a particular feature; or, a request to the operator to the operator for additional information in the form of a pop-up panel with prompts directed to the operator.

While menus and pulldown menus are extremely useful in assisting a computer operator, a more useful evolution in these techniques would permit the operator to customize the menu to suit his or her personal preferences or capabilities. It is, of course, possible to modify a page menu by altering certain language files or lists of commands. This type of modification is not done by the operator but by a system administrator. The technical sophistication required to accomplish this modification is typically beyond the scope of the abilities of all but the most technically sophisticated operator.

In view of the above, it should be obvious that a need exists for a method which will permit an operator to easily modify a menu to suit a particular

SUMMARY OF THE INVENTION

It is therefore one object of the present invention to provide a graphical method of customizing a menu display.

It is another object of the present invention to provide a graphical method of customizing menu displays which will accommodate pulldown menu displays.

It is yet another object of the present invention to provide a graphical method of customizing menu displays which utilizes interactive graphic techniques.

The foregoing objects are achieved as is now described. The graphical method of the present invention begins by displaying a selected menu or pulldown menu having a plurality of menu entries. The operator then graphically designates particular menu entries and elects a selected customizing option. In the depicted embodiment of the present invention the customizing options are displayed as elements of a customizer screen and include options such as: copy; cut; paste; restore; clear; and file. By utilizing this method, the operator may graphically alter the menu by moving or deleting a menu entry or by altering the textual appearance of a menu entry. In a preferred embodiment of the present invention the operator may also elect to identify a particular menu entry with a single keystroke for accelerated selection during later operation.

BRIEF DESCRIPTION OF THE DRAWINGS

The novel features believed characteristic of the invention are set forth in the appended claims. The invention itself; however, as well as a preferred mode of use, further objects and advantages thereof, will best be understood by reference to the following detailed description of an illustrative embodiment when read in conjunction with the accompanying drawings, wherein:

FIGURE 1 is a pictorial representation of a customizer screen which may be utilized with the present invention;

FIGURE 2 is a flow diagram of one process of menu customization in accordance with the present invention;

FIGURE 3 is a flow diagram of the software operations of a menu customizing method in accordance with the present invention;

FIGURE 4 is a flow diagram of the high level customizing options of a menu customizing method in accordance with the present invention;

FIGURE 5 is a flow diagram of the edit commands of a menu customizing methods in accordance with the present invention;

FIGURE 6 is a flow diagram of the file commands of a menu customizing method in accordance with the present invention; and

FIGURE 7 is a flow diagram of the other commands of a menu customizing methods in accordance with the present invention.

## DETAILED DESCRIPTION OF THE PREFERRED EMBODIMENT

While there are several techniques which may be utilized with the method of the present invention, the following specification depicts a particular graphical technique which represents one excellent approach.

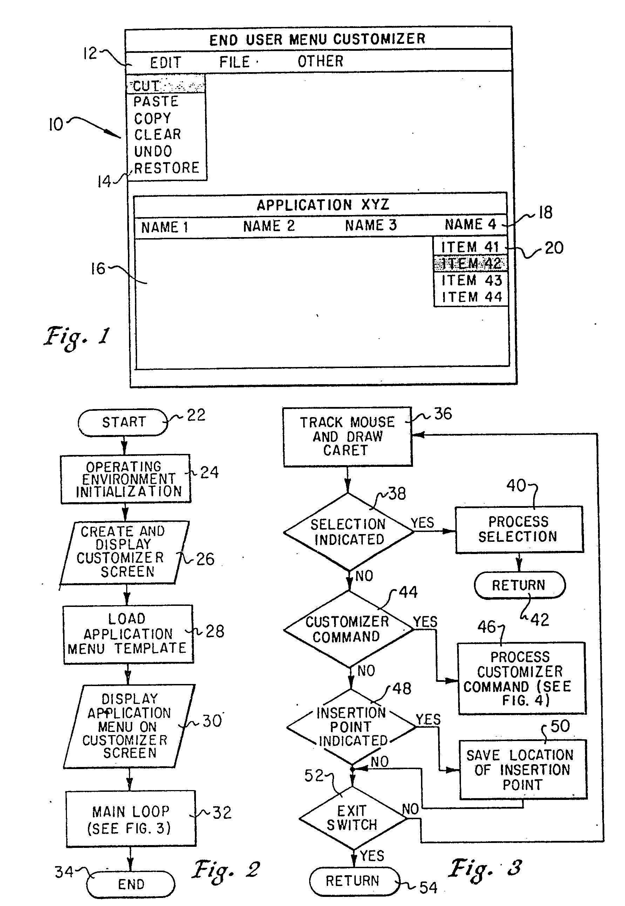

With reference now to the figures and in particular with reference to FIGURE 1, there is depicted a pictorial representation of a customizer screen 10 of the present invention. As can be seen, customizer screen 10 includes a menu bar 12 which includes a plurality of menu bar names such as: EDIT, FILE, and OTHER, or other customizing options. Each menu bar name includes a plurality of additional menu items or customizing options which may be depicted in a window or view port such as window 14. Depicted within window 14 are selected menu items or customizing options under the EDIT function such as: CUT; PASTE; COPY; CLEAR; UNDO; and RESTORE.

Also depicted within customizer screen 10 is menu page 16. Menu page 16 may be either a page menu or a pulldown menu as illustrated. Menu page 16 includes a menu bar 18 which also includes a plurality of menu bar names. Each menu bar name also preferable includes a plurality of pulldown menu items which may be temporarily displayed in a window or view port such as window 20. As is known in such video displays, a particular menu item within window 14 or window 20 may be selected by the operator and the selection thereof indicated by displaying the selected item in reverse video. Thus, it should be obvious that an operator may display a selected menu within customizer screen 10 and by selecting particular menu items and customizing options alter the appearance of menu page 16 to suit his or her preference.

Referring now to FIGURE 2 there is depicted a flow diagram of the process of menu customization in accordance with the present invention. After starting and initializing the operating environment, as depicted in blocks 22 and 24, the operator creates and displays customizer screen 10 (see FIGURE ·1), as illustrated in block 26. Next, the operator loads the menu template for the menu he desires to customize and that menu is displayed on customizer screen 10 as depicted in FIGURE 1. This action is illustrated by blocks 28 and 30. Finally, as represented by block 32, the operator enters the main customizing loop, which is depicted in greater detail within FIGURE 3.

With reference now to FIGURE 3, the software operations of the main customizing loop are depicted. Block 36 represents the tracking of a mouse or other graphic indicator, such as a light pen, and the indication of a particular element of customizer screen 10 (see FIGURE 1). Decision block 38 is utilized to determine whether or not the operator has selected a menu item from menu page 16. If so, process selection block 40 is utilized to "highlight" the selection by utilization of reverse video or other indication techniques. As those skilled in this art will appreciate, the selection process may be implemented utilizing a "toggle" technique so that a second selection of a selected item will remove the indication of selection. Following the selection process, return block 42 is utilized to return the process to the beginning of the main customizing loop.

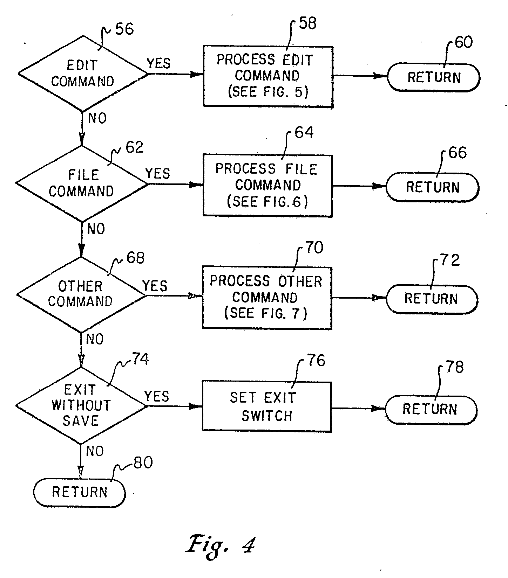

Still referring to FIGURE 3, if decision block 38 indicates that no menu entry has been selected, decision block 44 will be utilized to determine if a menu bar name within customizer screen 10 has been selected. If a menu bar name within customizer screen 10 has been selected, block 46 is utilized to process the selected menu bar name, as illustrated in greater detail within FIGURE 4. If no menu bar name has been selected, decision block 48 is utilized to determine whether or not the graphic indication is an indication of an insertion point for a menu item to be relocated. If so, the menu item is inserted as indicated by block 50. Finally, decision block 52 is utilized to determine whether or not the operator has elected to exit the main customizing loop.

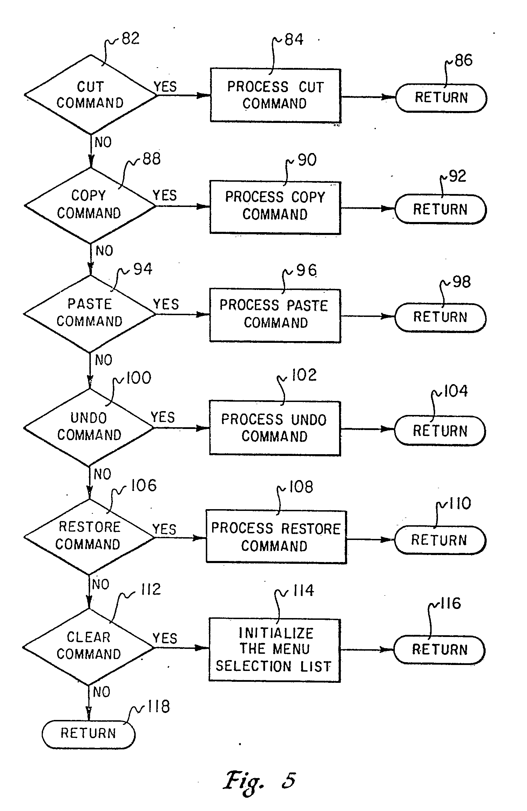

With reference now to FIGURE 4 there is depicted a flow diagram of the menu bar names or high level customizing options of the menu customizing method of the present invention. Decision block 56 is utilized to determine whether or not the EDIT command has been selected from menu bar 12 (see FIGURE 1). If the EDIT command has been selected, block 58 is utilized to implement the EDIT command and thereafter block 60 returns to the main customizing loop (FIGURE 3). The various operations within the EDIT command are illustrated in greater detail within FIGURE 5.

If an EDIT command has not been selected, decision block 62 is utilized to determine if a FILE command from menu bar 12 has been selected. As above, block 64 is representative of the implementation of the FILE command and block 66 indicates a return to the main customizing loop (FIGURE 3).

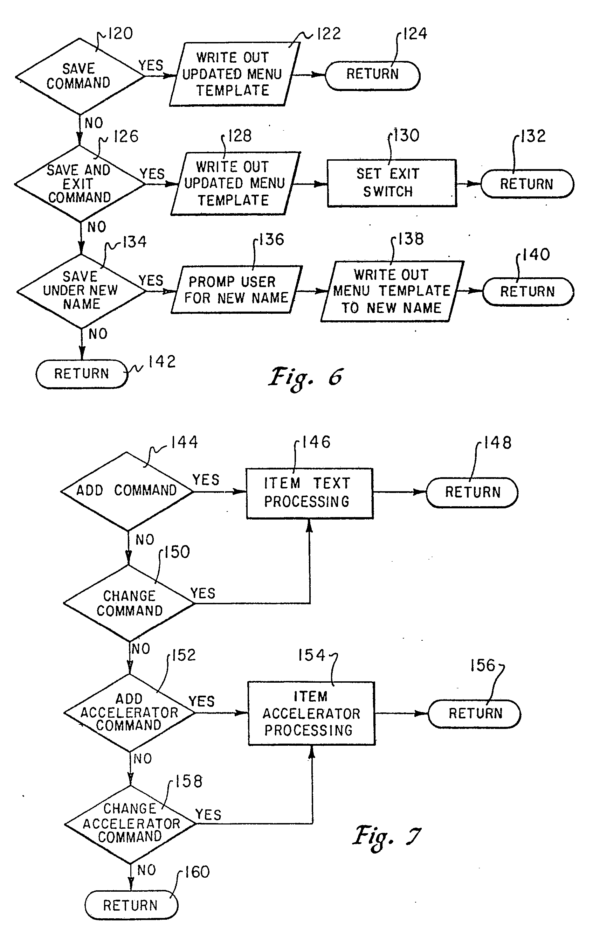

The various operations within the FILE command are illustrated further in FIGURE 6 below.

Next, decision block 68 is utilized to determine whether or not the OTHER command has been selected from menu bar 12. Block 70 is utilized to represent the implementation of the OTHER command and block 72 indicates a return to the main customizing loop. The detailed operations of the OTHER command are illustrated in greater detail in FIGURE 7. Finally, decision block 74 is representative of the operators selection of the exit option, with or without saving the menu modifications. Block 76 sets the exit switch and thereafter returns to the main customizing loop.

Referring now to FIGURE 5, there is depicted a flow diagram of the EDIT commands of the menu customizing method of the present invention. Decision block 82 is utilized to determine whether or not a CUT command has been selected and if so, the command is processed as indicated in block 84. A CUT command involves the writing of a selected menu item into a "clipboard" or temporary memory location, removing that menu from the display of menu page 16, and removing the selection indication from the menu item, indicating the operation has taken place. Thereafter, as is the case after each command has been processed within FIGURE 5, the process returns to the main customizing loop (FIGURE 3).

Decision block 88 is utilized to determine whether or not a COPY command has been selected, and if so, the COPY command is processed as indicated in block 90. The COPY command writes the selected menu item into a clipboard memory for later use and removes the selection indication from the menu item, indicating the operation has taken place.

Decision block 94 is next utilized to determine whether or not a PASTE command has been selected. If a PASTE command has been selected, it is processed as represented by block 96. The PASTE command is utilized to add to menu page 16 the contents of the clipboard memory at the point indicated by the operator. (See block 48 of FIGURE 3)

Next, decision block 100 is utilized to determine whether or not an UNDO command has been selected. The UNDO command is then processed as indicated in block 102. The UNDO command is utilized to cancel the current selected menu items and to clear the contents of the clipboard memory. Thereafter, menu page 16 is restored to its previous state.

Decision block 106 is utilized to determine whether or not a RESTORE command has been selected. The RESTORE command is then processed, as indicated by block 108. The RESTORE command is utilized to return menu page 16 to its original state. In a preferred embodiment of the present invention, selection of the RESTORE command will cause a prompt statement to the operator that all session changes to menu page 16 will be lost. Thereafter, the current selected menu items are cancelled and the contents of the clipboard memory are cleared.

Finally, decision block 112 is utilized to determine whether or not the CLEAR command has been selected. If so, block 114 is utilized to initialize the menu selection list.

With reference now to FIGURE 6, there is depicted a flow diagram of the FILE commands of the menu customizing method of the present invention. Decision block 120 is utilized to determine whether or not a SAVE command has been selected. If so, block 122 represents the storing of an updated menu template, as customized in accordance with the present invention. Thereafter, the process returns to the main customizing loop (FIGURE 3). Next, decision block 126 is utilized to determine whether or not a SAVE AND EXIT command has been evoked. Block 128 is then effective to store the updated menu template. Next, the exit switch is set and the process returns to the main customizing loop as indicated by blocks 130 and 132.

Additionally, as illustrated by decision block 134, it is possible for the operator to save the updated menu under a new name. If this option is selected, block 136 acts to prompt the user to select a new name for the customized menu. Block 138 then stores the customized menu under the new name prior to returning to the main customizing loop.

Finally, with reference to FIGURE 7, there is depicted a flow diagram of the OTHER commands of the menu customizing method of the present invention. Decision block 144 is utilized to determine whether or not an ADD command has been selected. If so, block 146 is representative of the implementation of the ADD command. The ADD command allows the user to select from a list of available menu items, a particular item, and add that item to menu page 16. The ADD command also permits the operator to alter the textual appearance of the selected command. Thereafter, the menu template for menu page 16 is altered to include the selected item.

Decision block 150 is utilized to permit the operator to alter the textual appearance of an existing command by executing a CHANGE command. Block 146 is then effective to alter the name or content of the selected menu item. Decision block 152 may be utilized, in the depicted embodiment of the present invention, to execute an ACCELERATOR command. The ACCELERATOR command, as those skilled in this art will appreciate, is utilized to designate a single keystroke (typically the initial letter of the command) as an identifier for a particular menu item. Thereafter, the particular menu item may be selected by utilization of that single keystroke. Block 154 is utilized to designate the single keystroke associated with a selected command. Decision block 158 may also be utilized to alter the exiting ACCELERATOR command for a designated menu item.

The customizing options listed above are but several examples of the types of customizing operations which may be utilized in conjunction with the present invention. The concept of providing an interactive graphic technique for menu customization as herein depicted, will find wide application in allowing operators to modify and simplify complex menu systems to suit their individual desires. Another example of this graphical technique may be implemented without the utilization of a customizer screen by providing a menu customizing option within the menu of a particular application. In accordance with the present invention, election of this option would permit the operator to graphically alter the menu utilizing various keystrokes or by utilizing a pointing device such as a mouse or light pen. For example, menu entries may be relocated by utilizing a "point and click" technique to "drag" a menu entry to another location within the menu, rather than a "cut and paste" approach. Thus, without the necessity of extensive program code alteration, it will be possible for an operator to graphically alter the content and appearance of a selected menu to suit his or her particular situation.

While the invention has been particularly shown and described with reference to a preferred embodiment, it will be understood by those skilled in the art that various changes in form and detail may be made therein without departing from the spirit and scope of the invention herein depicted.

**Claims**

1. A method of graphically customizing a menu display comprising the steps of :
displaying a selected menu having a plurality of menu entries;
graphically designating a selected menu entry; and
graphically altering said selected menu entry.

2. A method of graphically customizing a menu display according to Claim 1 wherein said step of graphically altering said selected menu entry is further characterized as altering the textual content of said selected menu entry.

3. The method of graphically customizing a menu display according to Claim 1 wherein said step of graphically altering said selected menu entry is further characterized as deleting said selected menu entry.

4. The method of graphically customizing a menu display according to Claim 1 wherein said step of graphically altering said selected menu entry is further characterized as altering the location of said selected menu entry.

5. A method of customizing a menu display comprising the steps of :
providing a customizer screen having a plurality of selectable customizing options;
displaying a selected menu having a plurality of menu entries within said customizer screen;
designating a selected menu entry; and
selecting a particular customizing option for operation on said selected menu entry.

6. A method of customizing a menu display according to Claim 5 further including the step of :
storing said selected menu after operation on said selected menu entry.

7. A method of customizing a menu display according to Claim 5 wherein said plurality of selectable customizing options includes an option to alter the textual appearance of a selected menu entry.

8. A method of customizing a menu display according to Claim 5 wherein said plurality of selectable customizing options includes an option to delete a selected menu entry.

9. A method of customizing a menu display according to claim 5 wherein said plurality of selectable customizing options includes an option to alter the location of a selected menu entry within said selected menu.

10. A method of customizing a menu display according to claim 5 wherein said plurality of selectable customizing options includes an option to identify a particular menu entry with a single selected keystroke wherein said particular menu entry may thereafter be selected by said single selected keystroke.

11. A method of customizing a pulldown menu display comprising the steps of :
providing a customizer screen having a plurality of selectable customizing options;
displaying a selected pulldown menu within said customizer screen, said selected pulldown menu having a plurality of menu entries including menu bar names and menu items;
designating a selected menu entry; and
selecting a particular customizing option for operation on said selected menu entry.

12. A method of customizing a pulldown menu display according to claim 11 further including the step of :
storing said selected pulldown menu after operation on said selected menu entry.

13. A method of customizing a pulldown menu display according to claim 11 wherein said plurality of selectable customizing options includes an option to alter the textual appearance of a selected menu entry.

14. A method of customizing a pulldown menu display according to claim 11 wherein said plurality of selectable customizing options includes an option to delete a selected menu entry.

15. A method of customizing a pulldown menu display according to claim 11 wherein said plurality of selectable customizing options includes an option to alter the location of a selected menu entry within said selected pulldown menu.

16. A method of customizing a pulldown menu display according to claim 11 wherein said plurality of selectable customizing options includes an option to identify a particular menu entry with a single selected keystroke wherein said particular menu entry may there after be selected by said single selected keystroke.

## Fig. 1

**END USER MENU CUSTOMIZER**

12

EDIT    FILE ·    OTHER

CUT
PASTE
COPY
CLEAR
UNDO
RESTORE

10

14

**APPLICATION XYZ**    18

NAME 1    NAME 2    NAME 3    NAME 4

ITEM 41    20
ITEM 42
ITEM 43
ITEM 44

16

*Fig. 1*

---

START    22

OPERATING
ENVIRONMENT
INITIALIZATION    24

CREATE AND
DISPLAY
CUSTOMIZER
SCREEN    26

LOAD
APPLICATION
MENU TEMPLATE    28

DISPLAY
APPLICATION
MENU ON
CUSTOMIZER
SCREEN    30

MAIN LOOP
(SEE FIG. 3)    32

34    END

*Fig. 2*

---

TRACK MOUSE
AND DRAW
CARET    36

SELECTION
INDICATED    38    —YES→    PROCESS
SELECTION    40

NO

RETURN    42

CUSTOMIZER
COMMAND    44    —YES→    PROCESS
CUSTOMIZER
COMMAND (SEE
FIG. 4)    46

NO

INSERTION
POINT
INDICATED    48    —YES→    SAVE LOCATION
OF INSERTION
POINT    50

NO

52    EXIT
SWITCH    —NO→

YES

RETURN    54

*Fig. 3*

IBM — DA 987 024

Fig. 4

IBM — DA 987 024

*Fig. 5*

IBM — DA 987 024

## Fig. 6

```
120                    122                      124
SAVE      YES    WRITE OUT               RETURN
COMMAND  ──────  UPDATED MENU   ───────
                 TEMPLATE
   │
   NO
   │
   ▼ 126                 128              130              132
SAVE AND   YES   WRITE OUT        SET EXIT        RETURN
EXIT       ───── UPDATED MENU ──  SWITCH    ────
COMMAND          TEMPLATE
   │
   NO
   │
   ▼ 134                136              138              140
SAVE       YES   PROMP USER       WRITE OUT       RETURN
UNDER NEW  ───── FOR NEW NAME ──  MENU TEMPLATE ──
NAME                              TO NEW NAME
   │
   NO
   │
   ▼
RETURN  142
```

## Fig. 7

```
144                   146                      148
ADD COMMAND  YES   ITEM TEXT               RETURN
            ─────  PROCESSING   ───────
   │
   NO
   │
   ▼ 150
CHANGE       YES
COMMAND    ─────────────────────┐
   │
   NO
   │
   ▼ 152                154                      156
ADD          YES   ITEM                    RETURN
ACCELERATOR ─────  ACCELERATOR  ───────
COMMAND            PROCESSING
   │
   NO
   │
   ▼ 158
CHANGE       YES
ACCELERATOR ─────────────────────┐
COMMAND
   │
   NO  160
   │
   ▼
RETURN
```

IBM — DA 987 024